(19) Europäisches Patentamt / European Patent Office / Office européen des brevets

(11) **EP 2 003 424 B1**

(12) **EUROPEAN PATENT SPECIFICATION**

(45) Date of publication and mention
of the grant of the patent:
**27.07.2011 Bulletin 2011/30**

(21) Application number: **06798317.1**

(22) Date of filing: **25.09.2006**

(51) Int Cl.:
*G01D 5/245* (2006.01)   *G01P 3/487* (2006.01)

(86) International application number:
**PCT/JP2006/318992**

(87) International publication number:
**WO 2007/116542 (18.10.2007 Gazette 2007/42)**

(54) **MAGNETIC ENCODER AND METHOD FOR MANUFACTURING THE SAME**

MAGNETISCHER CODIERER UND VERFAHREN ZU SEINER HERSTELLUNG

CODEUR MAGNETIQUE ET SON PROCEDE DE FABRICATION

(84) Designated Contracting States:
**DE FR**

(30) Priority: **31.03.2006   JP 2006098792**

(43) Date of publication of application:
**17.12.2008   Bulletin 2008/51**

(73) Proprietor: **NAKANISHI METAL WORKS CO., LTD.**
**Osaka-shi, Osaka 530-8566 (JP)**

(72) Inventors:
• **KAMIJI, Michiyuki**
**Osaka-shi, Osaka 530-8566 (JP)**

• **ITOH, Yoshihiro**
**Osaka-shi, Osaka 530-8566 (JP)**
• **KANEIKE,Takashi**
**c/o NAKANISHI METAL WORKS CO., LTD.**
**Osaka-shi, Osaka 530-8566 (JP)**

(74) Representative: **Viering, Jentschura & Partner**
**Postfach 22 14 43**
**80504 München (DE)**

(56) References cited:
**JP-A- 2005 233 923      JP-A- 2005 241 289**
**JP-A- 2005 308 559      US-A- 4 827 604**
**US-A1- 2004 017 301**

EP 2 003 424 B1

**Description**

**TECHNICAL FIELD**

The present invention relates to a magnetic encoder used for detecting a rotation number (rotation speed) of a rotating body, and more specifically relates to a magnetic encoder used in a device for detecting a rotation number of an automobile tire or a rotation number detecting device for a relatively rotating bearing. It also relates to a method for manufacturing the same.

**BACKGROUND ART**

Conventionally, in a magnetic encoder used for a rotating speed detection device for detecting the rotation speed of an automobile tire, an axial type magnetic encoder is equipped with an annular reinforcing core and an annular scale formed on one surface of the core and having magnets multipolarly magnetized in the circumferential direction thereof.

This magnetic encoder is fixed to an end portion of a rotating shaft as a rotating portion, while a sensor for detecting changes in magnetic field is placed so as to be adjacently opposed to the annular scale of the magnetic encoder. The sensor detects the changes in magnetic field generated from the annular scale of the rotating magnetic encoder to thereby detect the rotation speed.

Conventionally, as described in the following Patent Document 1, as the annular scale of the aforementioned magnetic encoder, rubber magnetic materials have been widely used.

As the rubber magnetic materials, materials (magnetized rubber materials) in which magnetic powder made of, e.g., ferrite is blended in rubber material, such as, e.g., synthetic rubber, in a dispersed manner, have been widely used.

The magnetic encoder is manufactured by vulcanizing and molding the aforementioned magnetic rubber material, multipolarly magnetizing it so that N poles and S poles are arranged alternatively in the circumferential direction to form an annular scale molded member, and then fixing the scale molded member on one surface of a core via an adhesive material by baking.

In the mean time, in the technical field of a magnetic encoder, especially a magnetic encoder for use in automobiles, it has been eagerly sought to improve the detection accuracy, improve the productivity and reduce the manufacturing cost. As one of the countermeasures, it has been considered to employ the technology in which plastic magnetic material is used in place of a conventionally widely used rubber magnetic as disclosed in the following Patent Document 2.

In comparison with rubber magnetic material, the plastic magnetic material is higher in orientation rate of magnetic particles by a magnetic field formation, so the magnetic force is large and improvement in detection accuracy can be expected. Furthermore, it can be manufactured efficiently by, e.g., thermoforming, so improvement of productivity can also be expected.

Patent Document 1: Japanese Unexamined Laid-open Patent Publication No. H11-281659

Patent Document 2: Japanese Unexamined Laid-open Patent Publication No. 2005-315782 (see claims)

**DISCLOSURE OF THE INVENTION**

**PROBLEMS TO BE SOLVED BY THE INVENTION**

In the meantime, a wheel rotation number detection device for use in automobiles is used under severe conditions, e.g., in a high temperature environment, in a low temperature environment, in a muddy water environment, or in an environment containing high concentration of salt content for antifreeze. For example, in a cold region, during the parking, the detection device may sometimes be exposed to an extremely low temperature of approximately -40 °C. On the other hand, during the driving, the detection device may sometimes be exposed to a high temperature of approximately 120 °C because of influences of, e.g., the heat transmission from the engine or the temperature rising due to the bearing rotation.

As mentioned above, a magnetic encoder for use in automobiles is also used in severe temperature environments. The plastic forming the annular scale molded member for the magnetic encoder is larger in thermal coefficient expansion as compared to the metal forming the core and poor in elasticity in contrast to rubber. Therefore, in sever temperature environments, the difference between the thermal expansions thereof causes a great amount of deforming stress in the plastic scale molded member, resulting in cracks of the scale molded member and/or deteriorated adhesiveness, which in turn may cause detachment or dropping of the scale molded member from the core.

On the other hand, as a method for securing plastic magnetic material to a core, commonly employed methods include an insert molding method using a core as an insert member and a method in which plastic magnetic material is thermally formed into an annular shape to produce an independent scale molded member, and then the scale molded member is fixed to the core using an adhesive material.

Even in either methods, however, plastic magnetic material is joined to a core via an adhesive material, which requires the step of applying the adhesive material. This increases the number of steps, resulting in deteriorated productivity and increased manufacturing cost.

Furthermore, in cases where insert molding is performed by applying an adhesive material to a core, in addition to adverse effects due to the aforementioned sever temperature environments, internal stress will also be generated in the plastic magnetic material (scale molded member) immediately after the thermoforming, which may accelerate occurrence of cracks and/or detachment of the scale molded member.

In order to improve adhesiveness of plastic magnetic material to a core, countermeasures, e.g., a blending special modifier or using a special adhesive material, have been proposed. These measures, however, increase the production cost. Accordingly, it is currently difficult to employ these measures.

The present invention was made in view of the aforementioned problems of the conventional techniques, and aims to provide a magnetic encoder and a production method thereof capable of securing sufficient adhesive strength of the plastic magnetic scale molded member with respect to a core, capable of preventing occurrence of cracks and/or breakage of the molded member, and also manufacturing at a low cost with high productivity.

## MEANS TO SOLVE THE PROBLEMS

The present invention provides means to solve the abovementioned problems.

[1] A magnetic encoder equipped with an annular core and an annular scale molded member formed on one surface of the core and made of a plastic magnetic material multipolarly magnetized in a circumferential direction of the core, characterized in that

a plurality of radial grooves extended radially and opened in a radially inward direction are formed on one surface of the core so that the grooves are arranged in the circumferential direction, and

a filled molded portion constituted by a plastic magnetic material filled in the radial groove is integrally formed with the scale molded member.

[2] The magnetic encoder in the aforementioned Item 1, wherein no adhesive material is provided between the core and the scale molded member.

[3] The magnetic encoder as recited in the abovementioned Items 1 or 2, wherein side wall inner surfaces of the radial groove are positioned on hypothetical radial lines extending radially from a center of the core, so that a width of the radial groove decreases as it advances in a radially inward direction.

[4] The magnetic encoder, as recited in any one of the abovementioned Items 1 to 3, wherein a detachment prevention protruded portion for preventing the scale molded member from being detached in an axial direction thereof is formed on a side wall inner surface of the radial groove.

[5] The magnetic encoder as recited in any one of the abovementioned Items 1 to 4, wherein a rising portion for preventing detachment of the scale molded member in an axial direction thereof by being engaged with an outer circumferential end surface of the scale molded member is formed on an outer circumferential edge portion of the core.

[6] The magnetic encoder in any one of the Items 1 to 4, wherein a surrounding molded portion made of a plastic magnetic material is integrally formed with an inner circumference portion of the scale molded member, and the surrounding molded portion is arranged so as to surround an inner circumference portion of the core from one surface of the core to the other surface of the core via an inner circumferential end edge of the core.

[7] A method for manufacturing a magnetic encoder equipped with an annular core and an annular scale molded member formed on one surface of the core and made of a plastic magnetic material multipolarly magnetized in a circumferential direction of the core, characterized in that

the method comprises

a step of obtaining an annular core in which a plurality of radial grooves extended radially and opened in a radially inward direction of the core are arranged in the circumferential direction, and

a step of obtaining a magnetic encoder by performing injection molding in a magnetic field using a plastic magnetic material as a molding material and a core as an insert material to form filled molded portions by a molding material filled in the radial grooves and to form the scale molded member integrally provided with the filled molded portions.

## EFFECTS OF THE INVENTION

According to the magnetic encoder of the aforementioned invention [1], since the scale molded member is formed on one surface of the core with a plurality of radial grooves formed on the one surface of the core and the filled molded portions are integrally formed within the radial grooves together with the scale molded member, the scale molded member is structurally fixed to the radial grooves via the filled molded portions. Therefore, it is possible to effectively prevent the scale molded member from being detached or displaced from the core and tightly fix the scale molded member to the core with sufficient strength.

Further, in the present invention, since the radial grooves extended radially and opened in a radially inward direction are formed on the core and the filled molded portions are filled and molded in the radial grooves, occurrence of cracks and breakage due to the thermal expansion difference between the core or the scale molded member can be prevented. That is, when the scale molded member shrinks/expands with respect to the core, the scale molded member entirely shrinks/expands along the radial direction while retaining the similar shape, which causes movement of the filled molded portions filled in the radial grooves in the radial direction along the radial grooves as the scale molded member shrinks or expands. This movement prevents the occurrence of stress concentration on the scale molded member and the filled molded portions, which in turn can prevent the occurrence of problems, such as, cracks and breakage of the scale molded member.

The magnetic encoder of the present invention can be manufactured by mass producible thermoforming, such as, e.g., insert molding. Thus, the improvement of productivity rate and reduction of the production cost can be attained.

According to the encoder of the aforementioned invention [2], the scale molded member is coated and molded onto the core without using adhesive material, so the step of applying the adhesive material can by omitted. This enables further improvement of the production efficiency and further reduction of the production cost.

According to the magnetic encoder of the aforementioned invention [3], the radial groove is formed such that the width thereof decreases as it advances in a radially inward direction. Therefore, when the scale molded member shrinks, for example, the filled molded portion is displaced smoothly in a radially inward direction along the radial groove while being deformed so as to decrease the width. To the contrary, when the scale molded member expands, the filled molded portion is displaced smoothly in a radially outward direction along the radial groove while being deformed so as to increase the width. In this manner, the filled molded portion is readily and smoothly displaced along the radial groove when the scale molded member shrinks/expands, so the occurrence of large stress concentration on the filled molded portion or the scale molded member can be prevented, which in turn can assuredly prevent the occurrence of troubles, such as, e.g., cracks or breakage of the scale molded member.

According to the magnetic encoder of the aforementioned invention [4], a detachment prevention protruded portion is provided on the side wall inner surface of the radial groove. Therefore, the filled molded portion in the radial groove is engaged with the detachment prevention protruded portion, more assuredly preventing the scale molded member from being detached from the core in the axial direction, which in turn makes it possible for the scale molded member to be tightly fixed to the core in a more stable manner.

According to the magnetic encoder of the aforementioned invention [5], a rising portion is provided on the outer circumferential edge portion of the core so that the rising portion is engaged with the outer circumferential end face of the scale molded member. Therefore, the detachment of the scale molded member in the axial direction can be further assuredly prevented, and the scale molded member can be tightly attached to the core in a more stable manner.

According to the magnetic encoder of the aforementioned invention [6], the surrounding molded portion integrally formed with the scale molded member is formed so as to surround an inner circumferential portion from one surface of the core to the other inner circumferential portions of the other surface thereof. Therefore, the engagement of this surrounding molded portion with the core more assuredly prevents the detachment of the scale molded member from the core in the axial direction, which enables the more stable joining.

Since the aforementioned invention [7] specifies one of methods of manufacturing a magnetic encoder having the structure of the aforementioned invention [1], a magnetic encoder having the same functions and effects as mentioned above can be manufactured.

**BRIEF EXPLANATION OF THE DRAWINGS**

[

[Fig. 1] Fig. 1 is a perspective view showing a magnetic encoder according to a first embodiment of the present invention.

[Fig. 2] Fig. 2 is a perspective view showing a partially cutout portion of the magnetic encoder of the first embodiment.

[Fig. 3] Fig. 3 is a perspective view showing a core member applied to the magnetic encoder of the first embodiment.

[Fig. 4] Fig. 4 is a perspective view showing a partially cutout portion of the core member of the first embodiment.

[Fig. 5] Fig. 5 is a perspective view showing a partially enlarged cutout portion of the core member of the first embodiment.

[Fig. 6] Fig. 6 is a plan view showing the core member of the first embodiment.

[Fig. 7] Fig. 7 is an enlarged plan view showing the portion surrounded by the dashed-dotted line in Fig. 6.

[Fig. 8] Fig. 8 is a schematic view for explaining the groove configuration of the radial groove.

[Fig. 9] Fig. 9 is a perspective view showing a partially cutout portion of a core member of the first modification of the present invention.

[Fig. 10] Fig. 10 is a partially enlarged perspective view showing a part of the core member of the first modification of the present invention.

[Fig. 11] Fig. 11 is a perspective view showing a partially cutout portion of a magnetic encoder of a second modification of the present invention.

[Fig. 12] Fig. 12 is a perspective view showing a partially cutout portion of the core member applied to a magnetic encoder according to a second modification.

[Fig. 13] Fig. 13 is a perspective view for explaining problems of the magnetic encoder of the second modification.

[Fig. 14] Fig. 14 is a perspective view showing a magnetic encoder of a sealing device according to a second embodiment of the present invention.

[Fig. 15] Fig. 15 is a perspective view showing a partially cutout portion of the magnetic encoder of the second embodiment.

[Fig. 16] Fig. 16 is a perspective view showing a magnetic encoder of a sealing device according to a third embodiment of the present invention.

[Fig. 17] Fig. 17 is a perspective view showing a partially cutout portion of the magnetic encoder of the third embodiment.

## DESCRIPTION OF REFERENCE NUMERALS

1 to 3...magnetic encoder
20...core
21...radial groove
22...side wall inner surface
25...detachment prevention protruded portion
40...scale molded member
41...surrounding molded portion
42...filled molded portion
120...core
121...radial groove
126...rising portion
140...scale molded member
142...filled molded portion
C...center of core
L...hypothetical radial line

## BEST MODE FOR CARRYING OUT THE INVENTION

<FIRST EMBODIMENT>

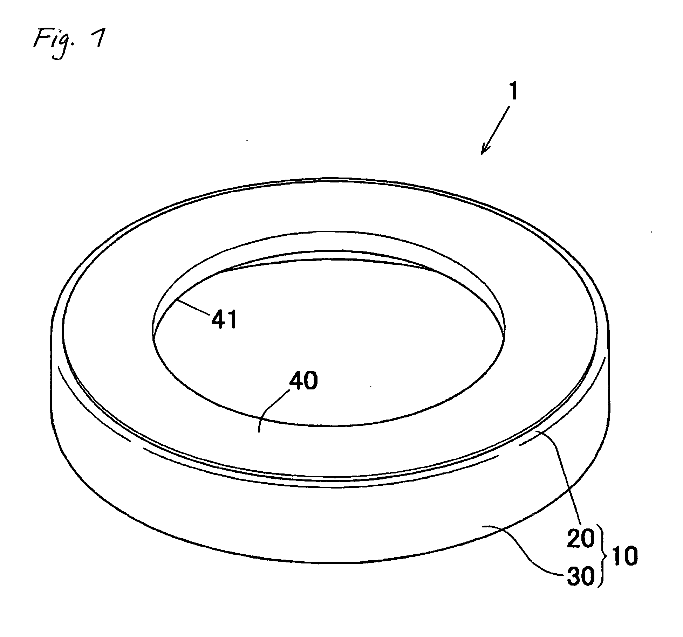

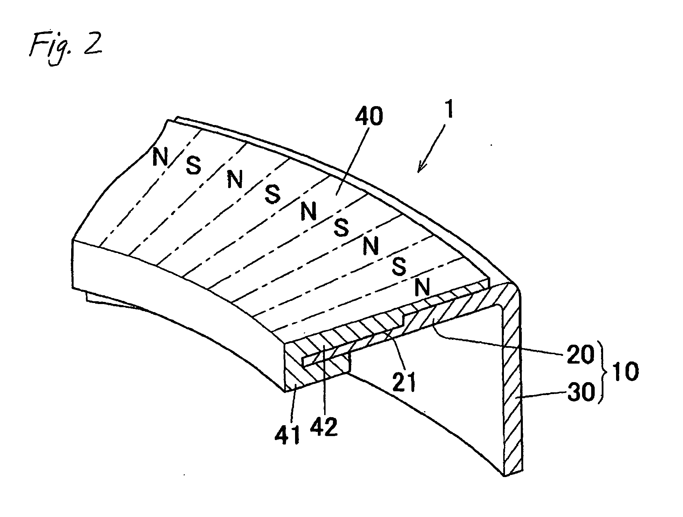

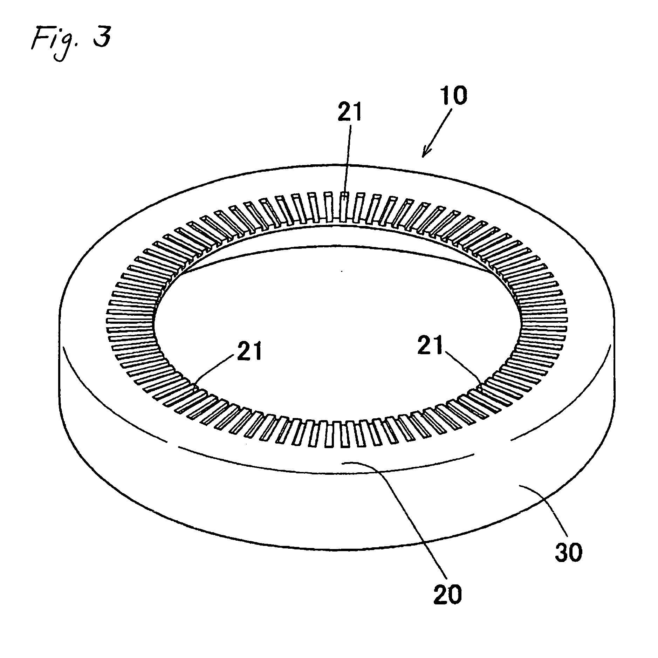

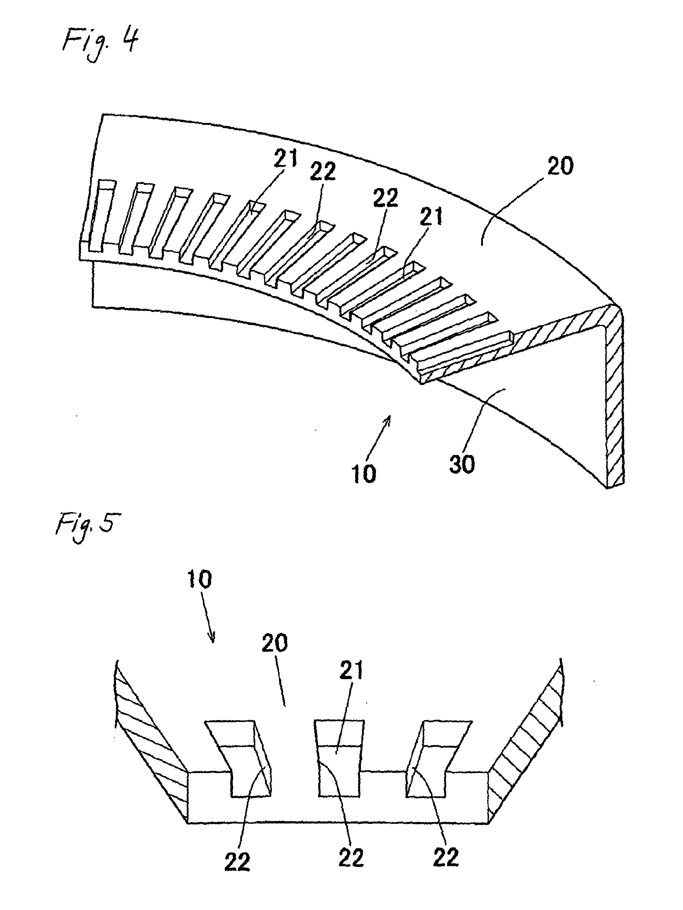

Figs. 1 and 2 show a magnetic encoder 1 according to a first embodiment of the present invention, and Figs. 3 to 7 show the core member 10 applied to the encoder 1. As shown in these figures, the magnetic encoder 1 of the first embodiment is equipped with a generally annular shaped core member 10 and an annular shaped scale molded member 40 made of a plastic magnetic material.

The core member 10 is constituted by a metal pressed molded member integrally having an annular plate shaped core 20 and a cylindrical attaching portion 30 upwardly extending from the outer circumferential edge portion of the core 20.

This core member 10 is formed by, for example, performing blanking or press working, such as, e.g., drawing, to a metal sheet, such as, e.g., a steel sheet having magnetism.

As the material of the core member 10, in consideration of the necessity of adhesiveness to the aforementioned plastic magnetic material and the necessity of preventing deterioration of the magnetic property of the magnetic material, a material having magnetism is used. Further considering the formability during the press working, it is preferable to use a low carbon steel plate, such as, e.g., a cold rolled steel plate (SPCC) as the material of the core member 10.

On one surface of the annular core 20 of the core member 10, a plurality of radially extending radial grooves 21 are formed evenly at certain pitches in the circumferential direction.

The radial groove 21 is rectangular in cross-section, and has a radially inward end portion opened inwardly and a radially outward end portion positioned at the inner side of the outer circumferential edge portion of the core 20 and closed with respect to the outside of the core.

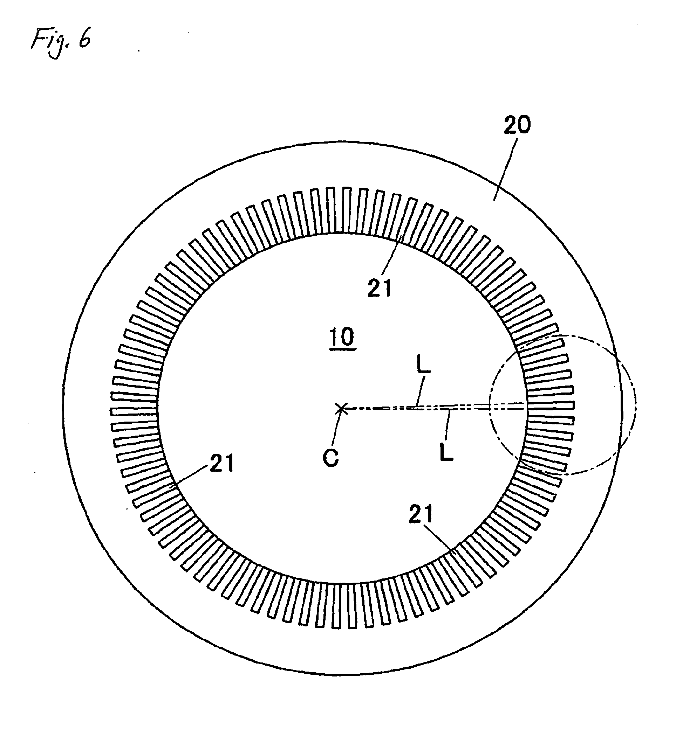

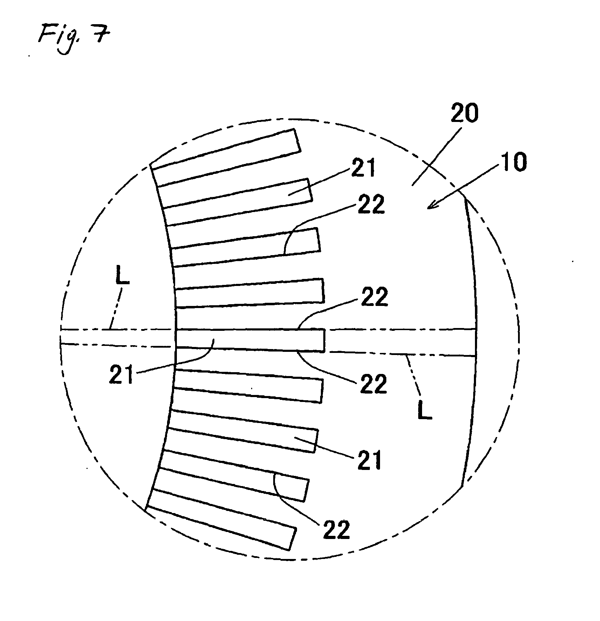

As shown in Figs. 6 and 7, the radial groove 21 is formed so that the inner side wall surfaces thereof 22 are arranged so as to coincide with the hypothetical radial lines L radially extending from the center C of the core 20 and the width of the radial groove 21 gradually decreases as it advances in the radially inward direction. Thus, in the radial groove 21, the side wall inner surfaces 22 are formed in a tapered manner, and the radial groove 21 is formed to have a trapezoid or generally trapezoid shaped groove or a fan-like or generally fan-like shaped groove in the plan view shown in Fig. 7.

In this embodiment, it is preferable to set the number of the radial grooves 21 to the same number as the total number of N poles and S poles of the scale molded member 40 since the effects to the magnetic characteristic by the formation of the radial grooves 21 are equalized.

The method of forming the radial grooves 21 is not particularly limited, and can be, e.g., cutting, pressing, or electric discharge machining. Considering the mass productivity, above all, pressing is preferable.

When forming the radial grooves 21 by pressing, using a punch die having protruded portions each corresponding to the shape of the groove arranged along the circumferential direction enables simultaneous forming of all of the radial grooves 21 by single press working. In this case, an annular core 20 of a metal plate, such as, e.g., a steel plate, is pinched from the top and the bottom by and between a pair of punches so that the punch die bites into the core to execute press working (coining work).

In the same manner as in the second embodiment which will be detailed later, the radial grooves 21 can be formed by half blanking.

In the case of forming the grooves 21 by coining work, the groove depth of the radial groove 21 is preferably set to 25 to 50% of the thickness of the core 20. If the radial groove 21 is too shallow, the plastic magnetic material constituting the scale molded member 40 cannot be sufficiently filled in and engaged with the groove, which may cause deteriorated adhesion strength of the scale molded member 40 to the core 20. To the contrary, if the radial groove 21 is too deep, the degree of processing increases, possibly causing warping or deformation, which in turn may decrease the dimensional accuracy.

As shown in Figs. 1 and 2, an annular scale molded member 40 made of a plastic magnetic material is formed on one surface of the core 20.

Further, at the inner circumferential portion of the scale molded member 40, a surrounding molded portion 41 made of a plastic magnetic material is integrally formed with the scale molded member 40. This surrounding molded portion 41 is arranged so as to surround the inner circumferential edge portion from one surface of the core to the other surface of the core via the core inner circumferential edge.

Also, in each of the radial grooves 21, a filled molded portion 42 constituted by a plastic magnetic material is integrally formed with the scale molded member 40.

In this embodiment, the plastic magnetic material constituting the scale molded member 40 including the molded portions 41 and 42, is constituted by a resin composition in which a resin material as a binding agent (binder) is mixed with magnetic powder.

As the magnetic powder, in addition to ferrite series magnetic powder, such as, e.g., strontium ferrite or barium ferrite, rare-earth magnetic powder, such as, e.g., neodymium series or samarium series, can be preferably used.

As the resin material to be used as the magnetic powder binder, thermoresin materials for injection molding can be used. Needless to say, the resin material to be used are arbitrarily selected, considering properties, such as, e.g., strength, heat resistance, chemical resistance, and magnetic properties, and workability, blending nature, and production cost. For example, in this embodiment, resin materials, such as, e.g., polyamide 6 (PA6), polyamide 12 (PA12), polyamide 612 (PA612), and polyphenylene sulfide (PPS) can be suitably used.

In this embodiment, it is preferably set so that the content of the magnetic powder in the plastic magnetic material falls within the range of 45 to 75 volume %. If the magnetic powder content is insufficient, the magnetism becomes poor, making it difficult to attain multi-polarization, which in turn may cause deterioration of the detection accuracy at the time of detecting the rotation speed. To the contrary, if the content of the magnetic powder is excessive, the blending quantity of the binder resin becomes relatively smaller, which makes it difficult to perform thermoforming and may also cause deterioration of the molding strength.

In this embodiment, the magnetic encoder 1 is manufactured by performing insert molding using the aforementioned plastic magnetic material. Using the plastic magnetic material as a molding material, injection molding is performed within a magnetic field by using the core member 10 as an insert member without using an adhesive material. With this, as shown in Figs. 1 and 2, at the region covering from one surface of the core 20 to the inner circumferential edge portion of the other surface via the inner circumferential end edge, the scale molded member 40 and the surrounding molded portion 41 of a plastic magnetic material is integrally formed. Further, the filled resin portion 42 made of a plastic magnetic material is integrally formed with the scale molded member 40 in each of the radial grooves 21 of the core 20.

After demagnetizing, the insert molded member obtained as mentioned above is subjected to prescribed multi-polarization using a magnetizing device prepared separately to multi-polarize the scale molded member 40 of the plastic magnetic material with the N pole and the S pole arranged alternatively in the circumferential direction as shown in Fig.

2. Thus, a magnetic encoder 1 is manufactured.

When the magnetic encoder 1 is used as a rotation speed detection device for e.g., a roller bearing, the cylindrical attaching portion 30 of the core member 10 is press-fitted on a rotating shaft portion, such as, e.g., a bearing inner ring, in an outwardly fitted manner, while the sensor (not illustrated) for detecting changes in magnetic field is adjacently placed so as to face the scale molded member 40. In this state, by making the sensor detect the changes of the magnetic field generated from the scale molded member 40 of the magnetic encoder 1 which is being rotated in synchronization with the rotating shaft portion, the rotation speed is detected.

According to the magnetic encoder 1 of this embodiment, a number of radially outwardly extending grooves 21 are formed at predetermined pitches in the circumferential direction on one surface of the core 20, and the plastic magnetic scale molded member 40 is formed on one surface of the core with the plastic magnetic filled molded portion 42 integrally formed in each of the radial grooves 21 with the scale molded member 40. Therefore, the scale molded member 40 can be mechanically fixed to the radial grooves 21 via the filled molded portions 42. This effectively prevents detachment of the scale molded member 40 from the core 20 in the axial direction thereof and displacement of the scale molded member 40 with respect to the core 20 in the circumferential direction thereof, resulting in excellent adhesive capability. Since the scale molded member 40 adheres to the core 20 also by magnetic absorption, combined with this magnetic absorption function, the detachment of the scale molded member 40 from the core in the axial direction thereof can be prevented more assuredly.

Furthermore, in this embodiment, since the surrounding molded portion 41 integrally formed with the scale molded member 40 is formed so as to surround the inner circumferential portion of the core 20 from one surface of the core 20 to the other surface of the core 20, the detachment of the surrounding molded portion 41 from the core 20 in the axial direction thereof can be prevented more assuredly, which enables more stable adherence.

Also, in this embodiment, the magnetic encoder 1 is manufactured by mass producible thermoforming, such as, e.g., insert molding, which enables to improve the productivity and to cut down the production cost.

Furthermore, in this embodiment, since the scale molded member 40 is coated and molded onto the core 20 by insert molding without using an adhesive material, the coating process of the adhesive material can be omitted, which makes it possible to further improve the production efficiency and further reduce the production cost.

Furthermore, according to this embodiment, it is possible to assuredly prevent the problems caused by the difference of the heat expansion rate between the scale molded member 40 including the surrounding molded portion 41 and the filled molded portion 42 and the core 20. In detail, in cases where the scale molded member 40 greatly shrinks with respect to the core 20 after the molding due to the temperature environment changes and/or the molding shrinkage immediately after the thermoforming, the scale molded member 40 cannot follow the core 20, which may cause cracks in the scale molded member 40 and/or detachment of the scale molded member 40. Therefore, in the magnetic encoder 1 of this embodiment, a plurality of radial grooves 21 which extend radially and opens in the radially inward direction are formed at predetermined pitches along the circumferential direction and the filled molded portions 42 are formed in the radial grooves 21. Therefore, even if the scale molded member 40 shrinks with respect to the core 20, the scale molded member 40 shrinks so that the radial size decreases in its entirety while keeping the similar shape. That is, the scale molded member 40 shrinks in its entirety along the radial direction, so the filled molded portion 42 in the radial groove 21 moves radially inwardly along the radial groove 21 in accordance with the shrinkage of the scale molded member 40. This movement easily absorbs the thermal expansion difference, preventing stress concentration on the scale molded member 40 or the filled molded portions 42, which assuredly prevents occurrences of troubles, such as, e.g., cracks in the scale molded member 40 or breakage of the scale molded member 40.

To the contrary, in cases where the scale molded member 40 expands relative to the core 20 due to the temperature environment changes, the scale molded member 40 radially expands in its entirety, so the filled molded portions 42 in the radial groove 21 moves radially outwardly along the radial groove 21 in accordance with the expansion of the scale molded member 40, resulting in an easy absorption of the thermal expansion difference. As a result, no stress concentration on the scale molded member 40 and the filled molded portions 42 occurs, which assuredly prevents the occurrences of troubles, such as, e.g., cracks in the scale molded member 40 or breakage of the scale molded member 40.

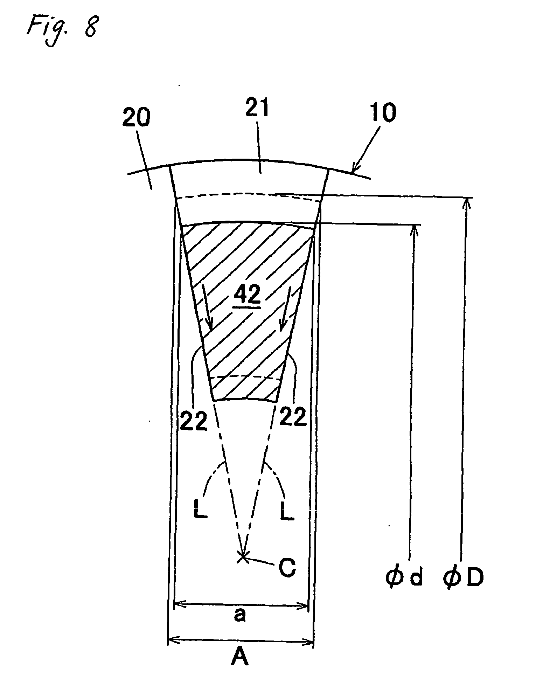

Now, the behaviors and size changes at the time of the shrinkage of the filled molded portions 42 within the radial grooves 21 in this embodiment will be explained in detail. As shown in Fig. 8, if the coefficient of thermal expansion of the plastic magnetic material constituting the scale molded member 40 of this embodiment is defined as "$\alpha$," the total number of the radial grooves 21 is defined as "2n," and when the diameter of the annular scale 40 shrinks from "$\phi D$" to "$\phi d$" due to the temperature difference "$\Delta t$", the relationship can be given by the following equation (1), and the equation (2) is derived from the equation (1).

$$D - d = \alpha D \cdot \Delta t \ \dots \ (1)$$

$$d = D - \alpha D \cdot \Delta t \ \dots \ (2)$$

In the filled molded portions 42 filled in the radial groove 21, if the width of the outer circumferential end edge before the shrinkage due to the temperature change "$\Delta t$" is defined as "A," and the width of the outer circumferential edge after the shrinkage is defined as "a", the following equations (3) and (4) can be derived. In the calculation using these equations, for the sake of the easy understanding of the invention, the width size of the outer circumferential end edge of the filled molded portions 42 is assumed to be nearly equivalent to the circular arc line and the gap between the adjacent radial grooves 21 is assumed to be "0".

$$A = \pi \cdot D/2n \ \dots \ (3)$$

$$a = \pi \cdot d/2n \ \dots(4)$$

Further, the following equation (5) is derived from the equations (2) and (4).

$$a = \pi D (1 - \alpha \cdot \Delta t)/ 2n \ \dots(5)$$

Calculating the shrinkage rate (A-a)/A of the outer circumferential edge width of the filled molded portions 42 from the equations (3), (4), and (5), the following equation 6 is derived.

$$(A - a)/A = (A - \pi \cdot D(A - a) / AD (1 - \alpha \cdot \Delta t)/ 2n)/ A$$

$$= 1 - (\pi \cdot D/2n) (2n/\pi \cdot D) (1 - \alpha \cdot \Delta t)$$

$$= 1 - (1 - \alpha \cdot \Delta t)$$

$$= \alpha \cdot \Delta t \ \dots(6)$$

Further, comparing the equations (1) and (6), it is understood that the shrinkage rate (D - d)/D in the direction of the diameter in the scale molded member 40 and the shrinkage rate (A - a)/A of the outer circumferential end edge width of the filled molded portions 42 are equal.

That is, when the scale molded member 40 shrinks, the scale molded member 40 shrinks and deforms such that both side surfaces of the filled molded portions 42 are displaced in the inner diameter direction along the hypothetical radial lines L connecting both the side surfaces and the center C of the scale molded member 40.

As explained above, in this embodiment, the radial groove 21 is formed such that both the side wall inner surfaces 22 of the radial groove 21 are placed on the hypothetical radial lines L radially extending from the center C of the core 20 and that the groove width of the radial groove 21 gradually decreases as it advances towards the inner diameter direction. Therefore, when the scale molded member 40 shrinks, the filled molded portion 42 is displaced radially inwardly along the radial groove 21 while being deformed so as to decrease the width. In this manner, at the time of the shrinkage of the scale molded portion 40, the filled molded portion 42 easily and smoothly moves along the radial groove 21, which prevents large stress from being applied to the filled molded portions 42 or the scale molded member 40. This enables more assured prevention of occurrence of troubles, such as, e.g., cracks or breakage of the scale molded member 40.

On the other hand, when the scale molded member 40 expands with respect to the core 20, the filled molded portions 42 is displaced radially outwardly along the radial groove 21 while being deformed so as to increase the width. Consequently, in the same manner as mentioned above, also at the time of the expansion of the scale molded member 40, large stress is prevented from being applied to the filled molded portions 42 or the scale molded member 40. This enables assured prevention of occurrence of troubles, such as, e.g., cracks or breakage thereof.

In the case of forming the side wall inner surfaces 22 of the radial groove 21 along the radial lines L, if the number of the radial grooves 21 to be formed is large, the size difference between the inner edge width and the outer edge width of the radial groove 21 becomes small, resulting in small inclination of the side wall inner surface 22. Therefore, in cases where the number of radial grooves 21 to be formed is large, the radial groove 21 can be formed in a manner such that the inner edge width of the radial groove 21 and the outer edge width thereof are equal to each other and the groove width is constant without positioning the side wall inner surfaces 22 on the radial lines L.

Specifically, when the number of radial grooves 21 to be formed is 30 or less, it is preferable that the side wall inner surfaces 22 are positioned on the radial lines L so as to incline the side wall inner surfaces 22.

Furthermore, in cases where the radial grooves 21 are formed at equal intervals as in this embodiment, as the number of the grooves increases, the shrinkage amount of the filled molded portion 42 in each groove decreases. Thus, the stress at the time of the shrinkage can be decreased, which more assuredly prevents occurrence of cracks and detachment.

[FIRST MODIFICATION]

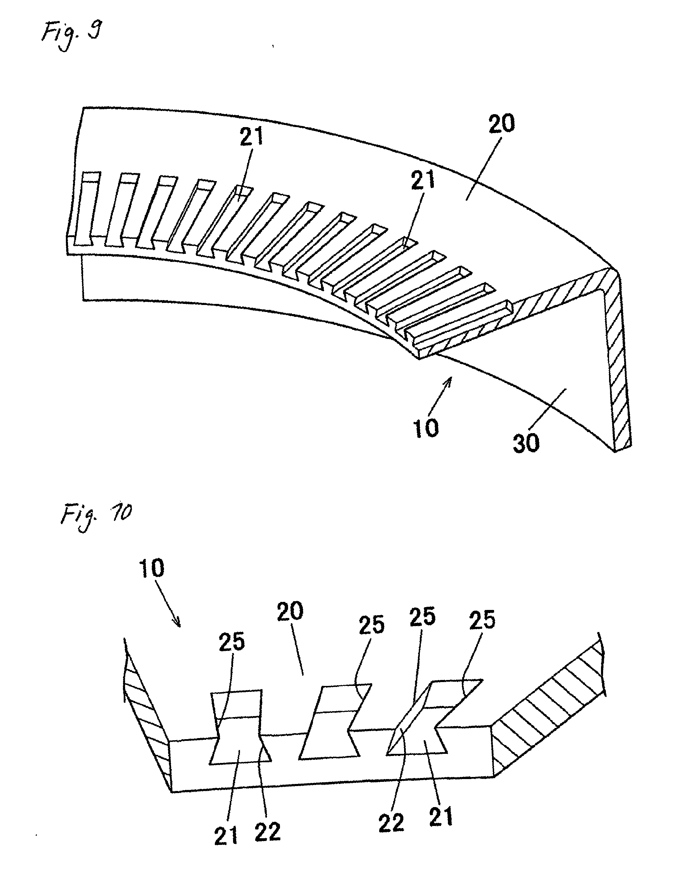

Figs. 9 and 10 are perspective views showing the core member 10 of the magnetic encoder of a first modification of the present invention. As shown in both figures, in this embodiment, the radial grooves 21 of the core 20 of the core member 10 are each formed into a dovetail groove shape. That is, both the side wall inner surfaces 22 of the radial groove 21 are formed into inwardly inclined surfaces, so that the opening width of the radial groove 21 is narrower than the groove bottom width thereof. The open edge portions of both the side walls of the radial groove 21 are constituted as detachment prevention protruded portions 25 protruded toward the inside of the groove. The other structures are the same as those of the abovementioned embodiment.

In this magnetic encoder using the core member 10 of the aforementioned structure, the filled molded portion 42 in the radial groove 21 is engaged with the detachment prevention protruded portions 25. This more assuredly prevents detachment of the scale molded member 40 from the core 20 in the opening direction of the radial groove 21, i.e., in the axial direction, which enables the scale molded member 40 to be tightly secured to the core 20 in a more stable manner.

In this first modification, the detachment prevention protruded portion 25 is formed continuously in the longitudinal direction of the radial groove 21. The present invention, however, is not limited to it. In the present invention, for example, the detachment prevention protruded portion can be formed partially within the radial groove 21.

Furthermore, in the present invention, in the case of forming the detachment prevention protruded portion 25 on the side wall inner surface of the radial groove 21, as the forming method, for example, a method of forming a detachment prevention protruded portion 25 by partially pressing the flat portion between the radial grooves on one surface of the core 20 to move the pressed material in the direction of the groove, can be employed.

[SECOND MODIFICATION]

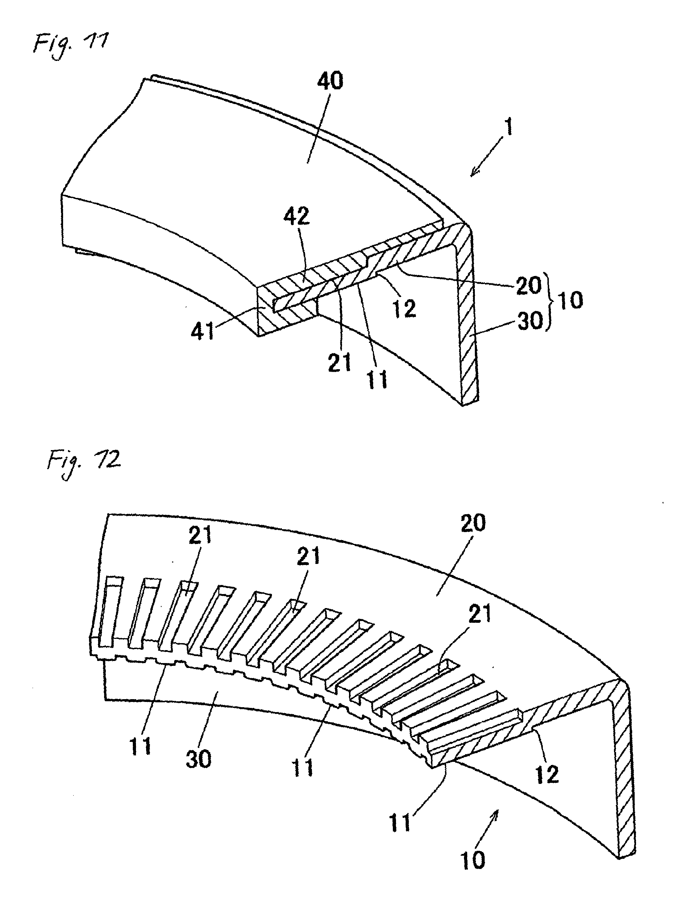

Fig. 11 is a perspective view showing a part of the magnetic encoder 1, and Fig. 12 is a perspective view showing a part of the core member 10 applied to the second modification of the present invention. In the second modification, the radial grooves 21 of the core 20 of the core member 10 are formed by half blanking. In the aforementioned embodiment, the radial grooves 21 were formed by pressing (coining). On the other hand, in this second modification, the radial grooves 21 are formed by half blanking that causes plastic flow of the material of the groove portion pressed with a pressing punch toward the rear side (the other side). The other structures are the same as those of the abovementioned embodiment.

In the case of forming the radial grooves 21 by half blanking as in the second modification, it is possible to increase the groove depth to about 90% of the thickness of the core 20 while maintaining the predetermined accuracy. In the case of forming the radial grooves 21 by coining as in the abovementioned embodiment, as explained above, the groove depth is limited to about 50% or less of the thickness of the core 20.

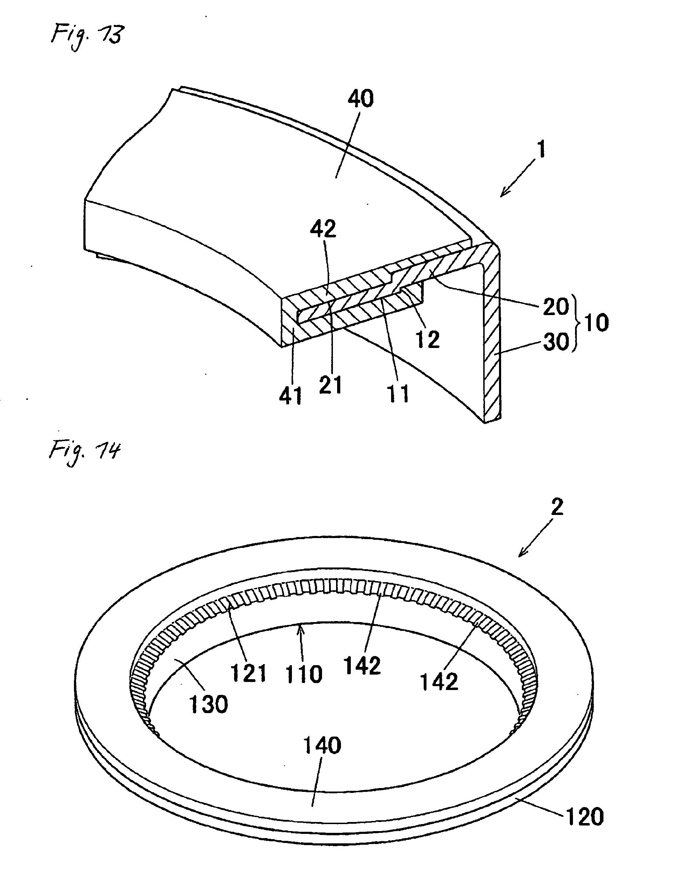

In the magnetic encoder 1 of the second modification, since swelled portions 11 are formed corresponding to the radial grooves 21 on the other surface side of the core 20, it is preferable to form the surrounding molded portion 41 of the scale molded member 40 covering from one surface side of the core 20 to the other surface side so as not to reach the outer edge stepped portion 12 of the protruded portion 11. That is, as shown in Fig. 13, if the surrounding molded portion 41 is formed up to the position beyond the outer edge stepped portion 12 of the swelled portion on the other surface of the core so as to cover the outer edge stepped portion 12, when the scale molded member 40 shrinks due to resin shrinkage, the surrounding molded portion 41 will be engaged with the outer edge stepped portion 12 to be prevented from following the shrinking behavior. This generates large deforming stress at around the stepped portion of the surrounding molded portion 41, which in turn causes cracks and/or breakage. Therefore, it is preferable to constitute such that the surrounding molded portion 41 does not cover the outer edge portion 12 of the swelled portion 11 formed on the other surface side of the core.

In the present invention, the surrounding molded portion 41 is not always required to be formed. The plastic molded member (scale molded member) can be formed only on one surface of the core 20 without covering the other surface side of the core with resin.

[SECOND EMBODIMENT]

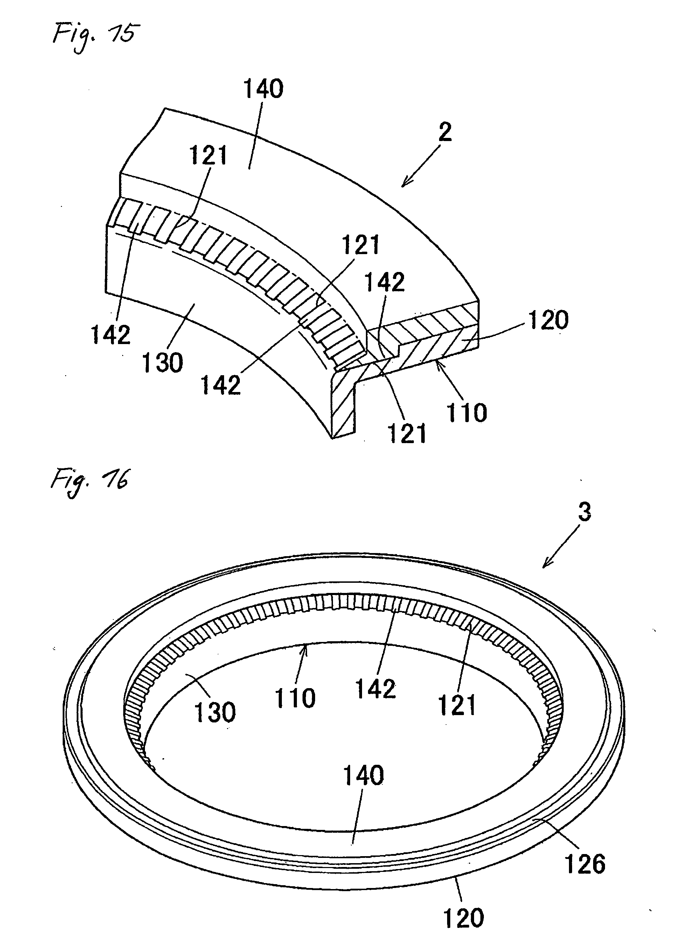

Figs. 14 and 15 are perspective views showing a magnetic encoder 2 of a second embodiment of the present invention. As shown in both figures, the magnetic encoder 2 of this second embodiment constitutes a part of a sealing device known as a packing seal and a hub seal, and the inner diameter side (inner ring side) slinger 110 of the sealing device corresponds to the core member 10 of the first embodiment.

The magnetic encoder 2 of this embodiment includes a generally annular slinger 110 and an annular scale molded member 140.

The slinger 110 is a metal press molded member integrally provided with an annular core 120 and a cylindrical attaching portion 130 upwardly protruded from the inner circumferential edge portion of the core 120.

On one surface (outer surface) of the annular core 120 of this slinger 110, radial grooves 121 extending radially outwardly are arranged in the circumferential direction at predetermined pitches.

As the material for the singer 110, in the same manner as in the first embodiment, a metal material having magnetism and good formability can be used. In addition to these properties, considering mud water resistance and corrosion resistance, stainless steel sheets, such as, e.g., ferrite series stainless (e.g., SUS430) sheets and martensite series stainless (e.g., SUS410) sheets, can be suitably used.

On one surface of the slinger 110, an annular scale molded member 140 is formed so as to cover the surface. The scale molded member 110 is made of plastic magnet.

Further, in the radial groove 121 of the slinger 110, a filled plastic portion 142 made of plastic magnetic material is integrally formed with the scale molded member 110.

The other structures are essentially the same as those of the aforementioned embodiments, so the duplicate explanation will be omitted by allotting the same or corresponding reference numerals to the same or corresponding portions.

The magnetic encoder 2 of this second embodiment is manufactured in the same manner as described above.

In the magnetic encoder of he second embodiment constructed as mentioned above, the annular attaching portion 130 of the slinger 110 is fixed to the inner bearing in an outwardly fitted manner, and the core 120 of the slinger 110 is arranged at the opening portion between the inner bearing and the outer bearing with the scale molded member 140 facing outward.

Furthermore, in the sealing device, such as, e.g., a hub seal, having the magnetic encode 2 of this embodiment, it is constituted such that an external diameter side slinger is fixed to the outer bearing in an inwardly fitted manner, and the seal lip provided on the outer diameter side slinger is in contact with the outer circumferential portion of the other surface (inner surface) of the core 120 of the slinger 110.

In this sealing device, a magnetic field detecting sensor is placed so as to face the scale molded member 140 to detect the rotation speed in the similarly manner as mentioned above.

Also in the magnetic encoder 2 of the sealing device, the same or similar effects as explained above can be attained.

According to the magnetic encoder 2 of the second embodiment, in the case of forming the radial grooves 121 on one surface (outer surface) of the core 120 of the slinger 110, there is a possibility that minute swelled portions are formed at the positions corresponding to the radial grooves 121 on the other surface (inner surface) of the core 120. As explained already, the other surface of the core 120 is a contact surface to be brought into contact with a seal lip of the outer diameter side slinger, so the surface is preferably formed into a flat shape so that the seal lip can be brought into contact therewith properly. Consequently, it is preferable that radial grooves 121 are not formed at positions to be contacted by the seal lip of the core 120. In other words, it is preferable that the outermost position of the radial groove 121 is positioned at the inner side of the contact position of the seal lip.

Particularly, in the case of forming the radial grooves 121 by half blanking pressing, the materials corresponding to the grooves formed by punch pressing are significantly moved toward the other surface side (inner surface side) to thereby form large swelled portions. Therefore, it is preferable that the outermost position of the radial groove 121 is set so that the swelled portion does not interfere with the seal lip.

[THIRD EMBODIMENT]

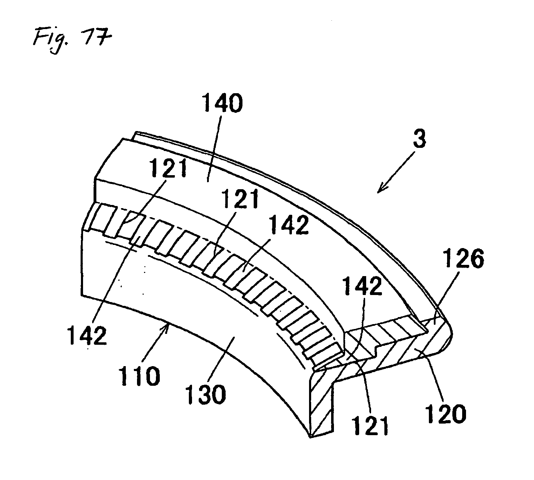

Figs. 16 and 17 are perspective views showing a magnetic encoder 3 of a third embodiment of the present invention. As shown in both figures, in the same manner as in the aforementioned second embodiment, this magnetic encoder 3 is used in a sealing device called a pack seal or a hub seal, and the inner diameter side (inner ring side) slinger 110 in the sealing device corresponds to the core member 10 of the first embodiment.

In this magnetic encoder 3, at the outer circumferential edge of the core 120 of the slinger 110, a rising portion 126 protruded toward one surface side (outer surface side) in the axial direction is formed. This rising portion 126 is slanted inwardly with the inner surface of the rising portion 126 forming an inclined surface inclined inwardly. It is configured such that the outer circumferential end face of the scale molded member 140 is fittedly secured to the inner surface of the rising portion 126.

The other structures are essentially the same as those of the second embodiment, so the cumulative explanation will be omitted by allotting the same or corresponding numerals to the same or corresponding portion.

Also in this magnetic encoder 3 of the third embodiment, the same or similar effects as in the first and second embodiments can be obtained. Furthermore, in this embodiment, the rising portion 126 is formed at the outer circumferential end edge of the core 120 of the slinger 110 and the outer circumferential end face of the scale molded member 140 is in contact with the rising portion 126. Therefore, the engagement of the outer circumferential end face of the scale molded member 140 with the inwardly inclined rising portion 126 prevents detachment of the scale molded member 140 in the axial direction more assuredly. This enables more stable joining of the scale molded member 140 to the slinger 110.

EXAMPLES

<EXAMPLE 1>

In the same manner as in the first embodiment shown in Figs. 1 to 7, a magnetic encoder 1 with the same configuration is manufactured. The core member 10 was made of SUS430, and the thickness of the core 20 was set to 0.6 mm, the depth of the radial groove 21 was set to 0.25 mm, and the equally divided number of the radial grooves 21 was set to 90 (the total pole number was 90). Furthermore, the radial grooves 21 were formed, in the same manner as in the first embodiment, in a fan-like form in which both side wall inner surfaces 22 were positioned along the radial lines L from the center of the core 20.

As the plastic magnetic material for forming the scale molded member 40, a resin composition having 60 volume % of strontium ferrite (magnetic powder) with respect to 6 volume % of polyamide (binder resin) was used. Using the resin composition material as a forming material and the core member 10 as an insert member, insertion molding was performed in the same manner as in the aforementioned first embodiment to form a scale molded member 40 having a thickness of 0.9 mm on the core member 10, to thereby produce the magnetic encoder of Example 1. No adhesive material was used in Example 1. That is, the insert molding was performed without applying adhesive material on the resign forming surface (adhesive surface) of the core sheet 10.

[EXAMPLE 2]

The radial grooves of the core member were formed in a parallel groove shape in which both side wall inner surfaces were extended in parallel from the outer diameter edge portion to the inner diameter edge portion. Other than the above, the magnetic encoder of Example 2 was manufactured in the same manner as in Example 1.

[COMPARATIVE EXAMPLE 1]

Using a core member in which no radial groove was formed and one surface of the core member was flat, adhesive material was applied onto the resin molding surface of the core member. Other than the above, the magnetic encoder of Comparative Example 1 was manufactured in the same manner as in Example 1.

[COMPARATIVE EXAMPLE 2]

Using a core member in which no radial groove was formed and one surface of the core member was flat, the same plastic magnetic material as in Example 1 was injection molded to prepare an independent scale molded member. Using an adhesive material, the scale molded member was adhered to one surface of the core of the core member. Other than the above, the magnetic encoder of Comparative Example 2 was manufactured in the same manner as in Example 1.

[EVALUATION TEST]

A thermal history impact test was performed by 1,000 cycles of the processing, wherein one cycle of the processing includes heating each magnetic encoder of the abovementioned Embodiments and Comparative Examples for 30 minutes at 150 °C and cooling it for 30 minutes at -40 °C. The test results and the main structure of each of the magnetic encoders are shown in Table 1.

[TABLE 1]

| | Example 1 | Example 2 | Comparative Example 1 | Comparative Example 2 |
|---|---|---|---|---|
| Existence or Nonexistence of Radial Groove | Yes (fan-like grooves) | Yes (parallel grooves) | No | No |
| Existence or Nonexistence of Adhesive material | No | No | Yes | Yes |
| Manufacturing Method | Insert Molding | Insert Molding | Insert Molding | Adhering after molding |
| Thermal history impact test (destruction cycle number) | 1,000 cycles No defects | 1,000 cycles No defects | 22 cycles of Occurrences of cracks | 437 cycles Occurrences of cracks |

As will be apparent from Table 1, no defects, such as, e.g., cracks or breakage, were found on the magnetic encoder of Examples 1 and 2 relating to the present invention after 1,000 cycles of the thermal history impact tests. Therefore, it is considered that the magnetic encoder of Examples can be used under sever temperature environments without causing any problems.

In comparison, among Comparative Examples deviating from the scope of the present invention, in the magnetic encoder of Comparative Example 1, cracks were generated in the scale molded member in the early stages of the tests. The magnetic encoder was extremely poor in heat resistance. Furthermore, also in the magnetic encoder of Comparative Example 2, cracks were formed in the scale molded member during the tests. Thus, it was poor in heat resistance. Therefore, it is considered that it is difficult to use the magnetic encoders of Comparative Examples 1 and 2 under sever temperature environments.

Further, after the thermal history impact tests as mentioned above, the magnetic properties of the magnetic encoders of Examples 1 and 2 were examined, but there was no change in magnetic properties, and it is confirmed that they maintained excellent magnetic properties.

After the thermal history impact tests, in the magnetic encoders of Examples 1 and 2, the existence of unsteadiness of the scale molded member to the core was observed with the encoder cooled to -40 °C. The observation revealed that no existence of unsteadiness was found in Example 1 and the scale molded member was attached in a stable manner. In comparison, in the magnetic encoder of Example 2, although existence of unsteadiness was slightly found as compared with Example 1, it was within the degree which causes no practical issue.

This application claims priority to Japanese Patent Application No. 2006-98792 filed on March 31, 2006, the entire disclosure of which is incorporated herein by reference in its entirety.

It should be understood that the terms and expressions used herein are used for explaining embodiments of the present invention and the present invention is not limited to them. The present invention allows various modifications falling within the claimed scope of the present invention.

**INDUSTRIAL APPLICABILITY**

The present invention can be allied to a magnetic encoder used for detecting a rotation number (rotation speed) of a rotating member, for example, a magnetic encoder used in a device for detecting the rotation number of an automobile tire or a rotation detecting device for a relatively rotating bearing.

**Claims**

1. A magnetic oncoder (1) equipped with an annular core (10) and an annular scale molded member (40) formed on one surface of the core and made of a plastic magnetic material multipolarly magnetized in a circumferential direction of the core,
**characterized in that**
a plurality of radial grooves (21) extended radially and opened in a radially inward direction are formed on one surface (20) of the core so that the grooves are arranged in the circumferential direction, and
a filled molded portion (42) constituted by a plastic magnetic material filled in the radial groove is integrally formed with the scale molded member.

2. The magnetic encoder as recited in claim 1, wherein no adhesive material is provided between the core and the scale molded member.

3. the magnetic encoder as recited in claim 1 or 2, wherein side wall inner surfaces of the radial groove are positioned on hypothetical radial lines (2) extending radially from a center of the core, so that a width of the radial groove decreases as it advances in a radially inward direction.

4. The magnetic encoder as recited in any one of the claims 1 to 3, wherein a detachment prevention protruded portion (25) for preventing the scale molded member from being detached in an axial direction thereof is formed on a side wall inner surface (22) of the radial groove.

5. The magnetic encoder as recited in any one of the claims 1 to 4, wherein a rising portion (126) for preventing detachment of the scale molded member in an axial direction thereof by being engaged with an outer circumferential end surface of the scale molded member is formed on an outer circumferential edge portion of the core (120).

6. The magnetic encoder as recited in any one of claims 1 to 4, wherein a surrounding molded portion (41) made of a plastic magnetic material is integrally formed with an inner circumference portion of the scale molded member, and the surrounding molded portion (41) is arranged so as to surround an inner circumference portion of the core from one surface of the core to the other surface of the core via an inner circumferential end edge of the core.

7. A method for manufacturing a magnetic encoder (1) equipped with an annular core (10) and an annular scale (40) molded member formed on one surface of the core and made of a plastic magnetic material multipolarly magnetized in a circumferential direction of the core, **characterized in that**
the method comprises
a step of obtaining an annular core in which a plurality of radial grooves (21) extended radially and opened in a radially inward direction of the core are arranged in the circumferential direction, and
a step of obtaining a magnetic encoder by performing injection molding in a magnetic field using a plastic magnetic material as a molding materials and a core as an insert material to form filled molded portions by a molding material filled in the radial grooves and to form the scale molded member integrally provided with the filled molded portions.

**Patentansprüche**

1. Ein Magnetcodierer (1), der mit einem ringförmigen Kern (10) und einem ringförmigen Skalen-Formelement (40) ausgestattet ist, das an einer Fläche des Kerns ausgebildet und aus einem Kunststoffmagnet-Material hergestellt ist, das in einer Umfangsrichtung des Kerns multipolar magnetisiert ist, **dadurch gekennzeichnet, dass**
eine Mehrzahl von sich radial erstreckenden und in einer Richtung radial nach innen offenen radialen Nuten (21) an einer Fläche (20) des Kerns ausgebildet ist, so dass die Nuten in der Umfangsrichtung angeordnet sind, und
ein aus einem in die radiale Nut gefüllten Kunststoff-Magnetmaterial gebildeter gefüllter Formabschnitt (42) einstückig mit dem Skalen-Formelement ausgebildet ist.

2. Der Magnetcodierer gemäß Anspruch 1, wobei zwischen dem Kern und dem Skalen-Formelement kein Haftmaterial vorgesehen ist.

3. Der Magnetcodierer gemäß Anspruch 1 oder 2, wobei Seitenwand-Innenflächen der radialen Nut auf hypothetischen radialen Linien (2) positioniert sind, die sich radial von einer Mitte des Kerns aus erstrecken, so dass eine Breite der radialen Nut kleiner wird, je mehr sie in einer Richtung radial nach innen fortschreitet.

4. Der Magnetcodierer gemäß einem der Ansprüche 1 bis 3, wobei ein Ablösungsverhinderungs-Vorsprungsabschnitt (25) an einer Seitenwand-Innenfläche (22) der radialen Nut ausgebildet ist, um zu verhindern, dass sich das Skalen-Formelement in einer Axialrichtung davon ablöst.

5. Der Magnetcodierer gemäß einem der Ansprüche 1 bis 4, wobei ein Erhebungsabschnitt (126) an einem Außenumfangsrand-Abschnitt des Kerns (120) ausgebildet ist, um das Ablösen des Skalen-Formelements in einer Axialrichtung davon zu verhindern, indem er mit einer Außenumfangs-Endfläche des Skalen-Formelements in Eingriff ist.

6. Der Magnetcodierer gemäß einem der Ansprüche 1 bis 4, wobei ein aus einem Kunststoffmagnet-Material gebildeter Umgebungs-Formabschnitt (44) einstückig mit einem Innenumfangsabschnitt des Skalen-Formelements ausgebildet ist und der Umgebungs-Formabschnitt (44) angeordnet ist, um einen Innenumfangsabschnitt des Kerns von einer Fläche des Kerns zu der anderen Fläche des Kerns über einen Innenumfangs-Endrand des Kerns zu umgeben.

7. Ein Verfahren zum Herstellen eines Magnetcodierers (1), der mit einem ringförmigen Kern (10) und einem ringförmigen Skalen-Formelement (40) ausgestattet ist, das an einer Fläche des Kerns ausgebildet und aus einem in einer Umfangsrichtung des Kerns multipolar magnetisierten Kunststoffmagnet-Material hergestellt ist, **dadurch gekennzeichnet, dass** das Verfahren aufweist:

   einen Schritt des Erhaltens eines ringförmigen Kerns, wobei eine Mehrzahl von radialen Nuten (21), die sich radial erstrecken und in einer radialen Innenrichtung des Kerns nach innen offen sind, in Umfangsrichtung angeordnet werden, und
   einen Schritt des Erhaltens eines magnetischen Codierers durch das Durchführen von Spritzgießen in einem Magnetfeld, wobei als Formmaterial ein Kunststoffmagnet-Material und als Einsetzmaterial ein Kern verwendet werden, um mittels eines Formmaterials, das in die radialen Nuten gefüllt wird, gefüllte Formabschnitte auszubilden, und um das Skalen-Formelement auszubilden, das einstückig mit den gefüllten Formabschnitten vorgesehen ist.

## Revendications

1. Encodeur magnétique (1) équipé d'un noyau annulaire (10) et d'un élément moulé d'échelle annulaire (40) formé sur une surface du noyau et réalisé en une matière plastique magnétique magnétisée de manière multipolaire dans une direction circonférentielle du noyau, **caractérisé en ce que**
   une pluralité de rainures radiales (21) s'étendant radialement et ouvertes dans une direction radialement vers l'intérieur sont formées sur une surface (20) du noyau de sorte que les rainures sont agencées dans la direction circonférentielle, et
   une partie moulée remplie (42) constituée par une matière plastique magnétique, introduite dans la rainure radiale et formée d'un seul tenant avec l'élément moulé d'échelle.

2. Encodeur magnétique selon la revendication 1, dans lequel aucun matériau adhésif n'est prévu entre le noyau et l'élément moulé d'échelle.

3. Encodeur magnétique selon la revendication 1 ou 2, dans lequel les surfaces intérieures des parois latérales de la rainure radiale sont positionnées sur des lignes radiales hypothétiques (2) s'étendant radialement à partir d'un centre du noyau, de sorte qu'une largeur de la rainure radiale diminue alors qu'elle avance dans la direction radialement vers l'intérieur.

4. Encodeur magnétique selon l'une quelconque des revendications 1 à 3, dans lequel une partie saillante de prévention de détachement (25) pour empêcher le détachement de l'élément moulé d'échelle dans une direction axiale de celui-ci est formée sur une surface intérieure de paroi latérale (22) de la rainure radiale.

5. Encodeur magnétique selon l'une quelconque des revendications 1 à 4, dans lequel une partie montante (126) pour empêcher le détachement de l'élément moulé d'échelle dans une direction axiale de celui-ci par une mise en prise avec une surface d'extrémité circonférentielle extérieure de l'élément moulé d'échelle et formée sur une partie de bord circonférentiel extérieur du noyau (120).

6. Encodeur magnétique selon l'une quelconque des revendications 1 à 4, dans lequel une partie moulée environnante (41) réalisée en une matière plastique magnétique est formée d'un seul tenant avec une partie de circonférence intérieure de l'élément moulé d'échelle, et la partie moulée environnante (41) est agencée de manière à entourer une partie de circonférence intérieure du noyau, d'une surface du noyau à l'autre surface du noyau, par l'intermédiaire d'un bord d'extrémité circonférentiel intérieur du noyau.

**7.** Procédé de fabrication d'un encodeur magnétique (1) équipé d'un noyau annulaire (10) et d'un élément moulé d'échelle annulaire (40) formé sur une surface du noyau et réalisé en une matière plastique magnétique magnétisée de manière multipolaire dans une direction circonférentielle du noyau, **caractérisé en ce que** le procédé comprend

une étape d'obtention d'un noyau annulaire à laquelle une pluralité de rainures radiales (21) s'étendant radialement et ouverte dans une direction radialement vers l'intérieur du noyau sont agencées dans la direction circonférentielle, et une étape d'obtention d'un encodeur magnétique en effectuant un moulage par injection dans un champ magnétique en utilisant une matière plastique magnétique en tant que matériau de moulage et un noyau en tant que matériau d'insert pour former des parties moulées remplies par un matériau de moulage introduit dans les rainures radiales et pour former l'élément moulé d'échelle pourvu d'un seul tenant des parties moulées remplies.

Fig. 1

Fig. 2

Fig. 3

Fig. 4

Fig. 5

Fig. 6

*Fig. 7*

Fig. 8

Fig. 9

Fig. 10

Fig. 11

Fig. 12

Fig. 13

Fig. 14

Fig. 15

Fig. 16

Fig. 77

**EP 2 003 424 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11281659 B
- JP 2005315782 A
- JP 2006098792 A